## Europäisches Patentamt
## European Patent Office
## Office européen des brevets

(11) Veröffentlichungsnummer: **0 171 385**
**B1**

(12) # EUROPÄISCHE PATENTSCHRIFT

(45) Veröffentlichungstag der Patentschrift:
**18.05.88**

(51) Int. Cl.⁴: **C 01 B 31/32, C 22 B 4/00**

(21) Anmeldenummer: **85890165.5**

(22) Anmeldetag: **25.07.85**

(54) **Verfahren zur Herstellung von Calciumcarbid sowie Schachtofen zur Durchführung des Verfahrens.**

(30) Priorität: **03.08.84 AT 2508/84**

(43) Veröffentlichungstag der Anmeldung:
**12.02.86 Patentblatt 86/7**

(45) Bekanntmachung des Hinweises auf die Patenterteilung:
**18.05.88 Patentblatt 88/20**

(84) Benannte Vertragsstaaten:
**BE DE FR GB IT SE**

(56) Entgegenhaltungen:
**EP-A-0 112 325**
**EP-A-0 118 655**
**DD-A-149 853**
**DD-A-149 854**
**DE-A-1 506 032**
**DE-C-740 830**
**GB-A-2 126 570**
**US-A-3 404 078**

**PATENT ABSTRACTS OF JAPAN, Band 1, Nr. 4 (C-76), 10. März 1977, Seite 44 C 76; & JP - A - 51 112 407 (ISHIKAWAJIMA-HARIMA) 04.10.1976**

(73) Patentinhaber: **VOEST- ALPINE Aktiengesellschaft, Muldenstrasse 5, A-4020 Linz (AT)**

(72) Erfinder: **Ebeling, Joachim, Dr., Watzmannstrasse 7, D-8223 Trostberg (DE)**
Erfinder: **Friedrich, Peter, Dr., Altenhamer Strasse 11, D-8221 Tacherting (DE)**
Erfinder: **Jekat, Herbert, Dr., Breslauer Strasse 73, D-7860 Schopfheim (DE)**
Erfinder: **Lugscheider, Walter, Dr. Dipl.- Ing., Biesenfeldweg 2, A-4040 Linz (AT)**
Erfinder: **Riegler, Ernst, Grollerstrasse 5, A-4470 Enns (AT)**
Erfinder: **Zajicek, Ernst, Donaulände 10, A-4100 Ottensheim (AT)**
Erfinder: **Achleitner, Walter, Spaunstrasse 29, A-4020 Linz (AT)**
Erfinder: **Jarema, Ferdinand, Dipl.- Ing., Dinghoferstrasse 63, A-4020 Linz (AT)**

(74) Vertreter: **Wolfram, Gustav, Dipl.- Ing., Schwindgasse 7 P.O. Box 205, A-1041 Wien (AT)**

EP 0 171 385 B1

## Beschreibung

Die Erfindung betrifft ein Verfahren zur Herstellung von Calciumcarbid in einem Schachtofen, wobei durch Einbringen von elektrischer Energie mittels einer Plasmabrennereinrichtung, welche die obere Abdeckung des Schachtofens durchsetzt, und einer im Bodenteil des Schachtofens vorgesehenen Gegenelektrode ein Plasmabogen (eine Plasmafackel) gebildet wird, um welche(n) konzentrisch ein Möllergemisch aus calciumoxid- und kohlenstoffhältigen Substanzen eingebracht und ein Schutzwall aus festen Möllerbestandteilen an der Innenwand des Ofens entsteht, sowie einen Schachtofen zur Durchführung des Verfahrens.

Das heute großtechnisch vorherrschende Verfahren zur Herstellung von Calciumcarbid im Elektroniederschachtofen aus gebranntem Kalk und kohlenstoffhaltigen Verbindungen besitzt u.a. den Nachteil, daß überwiegend hochwertige Ausgangsstoffe, wie z. B. teure Sorten stückigen Kokses und/-oder Anthrazits sowie ein Überschuß an Kalk eingesetzt werden müssen, um den elektrischen Widerstand und das Durchgasungsverhalten der Möllerschüttung ausreichend günstig zu halten sowie einen problemlosen Abstich des flüssigen Calciumcarbids zu gewährleisten. Ein weiterer Nachteil dieses herkömmlichen Verfahrens besteht darin, daß aufgrund der von oben in den Möller und Schmelzherd eintauchenden Elektroden ein schlechter Wärmeaustausch zwischen der Beschickung und den Ofengasen stattfindet.

Man hat deshalb versucht, Calciumcarbid beispielsweise im Schachtofen mit Hilfe von Plasmabrennern herzustellen.

Nachteilig bei der Carbidherstellung mit Hilfe von Plasmabrennern ist der Umstand, daß ein Großteil des Calciums bei den hohen Prozeßtemperaturen verdampft und mit dem heißen Prozeßgas aus den heißen Plasmazonen entweicht (vgl. G.W. Healy, Proceeding of Electric Furnace Conference 1965, Seiten 63 - 67). Es ist zwar prinzipiell möglich, die Verluste dadurch niedrig zu halten, daß man mit einer Schüttung aus grobstückigem Möller und mit relativ großen Mengen an Plasmagas bzw. bei relativ niedrigerer Plasmatemperatur arbeitet, doch ist es in diesem Fall erforderlich, große Gasmengen umzuwälzen und durch entsprechende Vorbehandlung zu reinigen, wodurch das Verfahren unwirtschaftlich wird.

Generell kritisch ist auch die Nutzung des Gaswärmeinhaltes, beispielsweise in einer Wirbelschicht mit staubförmigen Möllerkomponenten gemäß der US-A-3 404 078, da sich z. B. flüchtige Komponenten wie Magnesium in Form von Oxiden in störender Menge anreichern.

In dem DD-A-149 853 ist ein Verfahren beschrieben, bei dem Calciumcarbid durch Einblasen von Kalk- und Koksstaub in einen Plasmastrahl und anschließendes Abschrecken sowie Abtrennen des feinkörnigen Produktes hergestellt wird. Dieses Verfahren ist wegen der geringen Ausbeute an Calciumcarbid und des hohen spezifischen Strombedarfs aufgrund der hohen Wärmeverluste unwirtschaftlich. Dies trifft auch auf das Verfahren gemäß der DD-A-149 854 zu, nach dem flüssiges Calciumcarbid aus herkömmlichen Elektroniederschachtöfen durch thermische Nachbehandlung mit Hilfe eines Plasmastrahles auf über 80 % aufkonzentriert wird, weil die Hauptmenge an Calciumcarbid im Elektroniederschachtofen mit hohem Kalküberschuß hergestellt werden muß und nur noch der unumgesetzte Anteil an Kohlenstoff mit hohem spezifischen Elektroenergieeinsatz zur Reaktion gebracht wird.

Die Erfindung stellt sich die Aufgabe, die aufgezeigten Schwierigkeiten und Unzulänglichkeiten der bekannten Verfahren zur Calciumcarbidherstellung zu überwinden und ein betriebssicheres Verfahren unter Einsatz von Plasmabrennern zu schaffen, bei dem sowohl grob- als auch feinkörnige Möllerbestandteile verwendet werden können und bei dem Calciumcarbid in höheren Ausbeuten unter verbesserter Ausnützung der auf gewendeten Energie erhalten wird.

Die gestellte Aufgabe wird bei einem Verfahren der eingangs definierten Art erfindungsgemäß dadurch gelöst, daß das Möllergemisch getrennt als Grobkornfraktion und als Feinkornfraktion eingesetzt wird, wobei die Grobkornfraktion eine mittlere Teilchengröße von 1 bis 150 mm, vorzugsweise 3 bis 100 mm, und die Feinkornfraktion eine mittlere Teilchengröße von 0,001 bis 15 mm, vorzugsweise 0,001 bis 6 mm, aufweist, mit der Maßgabe, daß die Grobkornfraktion durch einen Ringspalt zwischen der Ofenwand und der Ofenabdeckung eingebracht wird und einen beweglichen Schutzwall entlang der Ofenwand bildet, und die Feinkornfraktion in den Raum zwischen Plasmabogen und Schutzwall eingebracht wird, wobei das bei der Umsetzung entstehende Prozeßgas durch den Schutzwall aus Grobkornfraktion und den Ringspalt austritt.

Auf diese Weise werden hohe Ausbeuten an Calciumcarbid trotz niedriger Wärmeverluste erzielt, wodurch die wesentlichen Voraussetzungen für ein wirtschaftliches Verfahren gegeben sind.

Vorteilhaft wird mit der Grobkornfraktion 5 bis 95 Massen-% der für die Umsetzung erforderlichen Kohlenstoffmenge eingebracht. Als kohlenstoffhältige Substanzen eignen sich vor allem Braunkohle und/oder Steinkohle und/oder Anthrazit und/oder Braunkohlenkoks und/oder Steinkohlenkoks und/oder Petrolkoks. Unter calciumoxidhältigen Substanzen sind solche Verbindungen zu verstehen, welche entweder Calciumoxid enthalten - wie gebrannter Kalk - oder aber welche bei den Prozeßtemperaturen zu Calciumoxid reagieren, wie Calciumcarbonat oder Calciumhydroxid.

Der aus der Grobkornfraktion des Möllergemisches gebildete Schutzwall an der Innenwand des Ofens in Gestalt eines Schüttkegels dient vor allem als Abschirmung der mit feuerfestem Material ausgemauerten Ofenwände gegen die Strahlung des Plasmabogens.

Die Feinkornfraktion wird unabhängig von der Menge und Zusammensetzung der Grobkornfraktion dem Ofen zugeführt. Die Zufuhr kann durch ein oder mehrere, die Ofenabdeckung durchsetzende Rohre erfolgen.

Zweckmäßig wird die Feinkornfraktion durch eine Mehrzahl von die Plasmabrennereinrichtung kranzförmig umgebende Rohre oder durch einen Ringspalt in der Ofenabdeckung eingebracht. Auf diese Weise wird eine gleichmäßige Umhüllung der Plasmafackel durch die Feinkornfraktion erzielt, so daß der Hauptanteil der Strahlungswärme durch den so gebildeten Staubschleier aufgenommen wird. Da an das feinkörnige Material keine besonderen Qualitätsanforderungen gestellt werden müssen und beispielsweise auch feinkörniger Kalk, wie er z. B. beim Transport stückigen Kalks zum Schachtofen anfällt, eingesetzt werden kann, ist man aus wirtschaftlichen Gründen bestrebt, den Feinkornanteil möglichst hoch zu halten.

Beim erfindungsgemäßen Verfahren ist es vorteilhafterweise möglich, bis zu 90 Massen-% des Möllergemisches als Feinkornfraktion einzubringen. Um einen hohen Durchsatz an feinkörnigem Material zu ermöglichen und um Verstopfungen zu vermeiden, wird nach einer vorteilhaften Ausführungsform die Feinkornfraktion mit einem Inertgas, vorzugsweise einem Prozeßgas, eingeblasen.

Nach einer weiteren vorteilhaften Ausführungsform des erfindungsgemäßen Verfahrens wird Calciumcarbid in flüssiger Form kontinuierlich vom Bodenteil des Schachtofens abgezogen.

Die Erfindung betrifft auch einen Schachtofen mit einer feuerfest ausgekleideten Ofenwand und einer oberen Abdeckung, durch welche eine Plasmabrennereinrichtung und eine Chargiereinrichtung geführt sind, und mit einer im Bodenteil des Ofens vorgesehenen Gegenelektrode.

Die Plasmabrennereinrichtung besteht zumeist aus einer oder mehreren, beispielsweise drei Kathode(n), welche durch die ebenfalls mit feuerfestem Material ausgekleidete obere Abdeckung in den Ofeninnenraum hineinragt(en). Jede Kathode kann in üblicher Weise mit einer Zündeinrichtung versehen und in vertikaler Richtung beweglich sein, so daß sie aus dem Ofeninnenraum ausgefahren werden kann. Die praktisch immer anodisch geschaltete Gegenelektrode für den (die) sogenannten übertragenen Plasmabogen(bögen) wird mittels Wasser oder Luft gekühlt.

Der erfindungsgemäße Schachtofen zur Durchführung des Verfahrens ist dadurch gekennzeichnet, daß zwischen dem oberen Randbereich der Ofenwand und der oberen Abdeckung ein von einer ringförmigen Ofenhaube überdeckter Ringspalt vorgesehen ist und die Ofenwand unter Ausbildung einer Ofenwanne zum Bodenteil hin kegelstumpfförmig konvergierend geformt ist.

Als ein vorteilhafter Effekt dieser konvergierend ausgebildeten Ofenwanne ist die Ausbildung eines sehr kurzen Abstichkanals möglich, welcher zu einem unproblematischen Entleeren des Ofens beiträgt.

Zweckmäßig beträgt das Verhältnis des Durchmessers des Bodenteiles zum Durchmesser des oberen Randbereiches der Ofenwand 1 : 2 bis 10, vorzugsweise 1 : 2 bis 5, so daß sich Neigungswinkel zwischen Ofenwand und Ofenboden von 100 bis 150°, vorzugsweise 120 bis. 130°, ergeben.

Vorteilhaft ist die zum Ofeninneren gerichtete untere Kante der oberen Abdeckung mit einer Schutzeinlage aus verschleißarmem Material - vorzugsweise Siliciumcarbid - versehen.

Nach einer bevorzugten Ausführungsform sind durch die Ofenhaube gasdicht Zufuhreinrichtungen für die Grobkornfraktion geführt.

Die Ofenhaube ist weiters zweckmäßig von wenigstens einer Abzugsleitung für das CO-hältige Prozeßgas durchsetzt. Das bei der Herstellung des Calciumcarbids entstehende Prozeßgas strömt durch den Schutzwall aus der Grobkornfraktion und durch den Ringspalt und wird schließlich durch die Abzugsleitung(en) nach außen abgeführt, dort nach den üblichen Verfahren gereinigt und aufgearbeitet. Mit dieser Prozeßgasführung nach dem Gegenstromprinzip werden größere Wärme- sowie Ausbeuteverluste durch verdampfendes Calcium verhindert.

Nach einer weiteren vorteilhaften Ausführungsform ist die Ofenhaube an der oberen Abdeckung befestigt, weist gegebenenfalls eine Wasserkühlung auf und ist mittels einer Wassertasse an der Außenseite der Ofenwand gegen den Ofeninnenraum abgedichtet, um Bewegungen der Ofenwanne nicht zu behindern.

Vorzugsweise ist der Bodenteil des Ofens mit graphitreichem Material ausgemauert und dient als Gegenelektrode bzw. Anode. Die Feuerfestausmauerung der geneigten Ofenwand besteht aus mehreren Lagen, wobei unmittelbar an der metallischen Außenhaut isolierende (Schamotte-)Steine anliegen und zum Ofeninnenraum hin bevorzugt kohlenstoff- bzw. graphitreiche Materialien verwendet werden.

Gemäß einer weiteren zweckmäßigen Ausführungsform ist die Ofenwanne sowohl in axialer als auch in radialer und/oder horizontaler Richtung mittels Hydraulikorganen bewegbar gelagert. Durch Bewegungen in einer oder beiden dieser Richtungen wird die entlang der Ofenwand aufgeschichtete Grobkornfraktion in Fluß gehalten, so daß es nicht zu Verkrustungen und Verbackungen und somit zu Störungen im Ofenbetrieb kommt.

Bevorzugt ist die Plasmabrennereinrichtung aus einem bis drei Plasmabrennern gebildet. Es ist also anstelle eines einzigen in der senkrechten Ofenachse verlaufenden Plasmabrenners auch möglich, mehrere, beispielsweise drei Brenner - vorzugsweise in gleichen Abständen von der Ofenachse - durch die obere Abdeckung zu führen. Wichtig ist dabei, daß die Feinkornfraktion in den Raum zwischen (den) Plasmabogen(bögen) und Schutzwall eingebracht wird.

Unter anderem aus diesem Grund ist es besonders vorteilhaft, wenn die durch die obere Abdeckung geführte Chargiereinrichtung für die Feinkornfraktion als drei bis sechs eine Plasmabrennereinrichtung kranzförmig umgebende Rohre oder als Ringspalt ausgebildet ist.

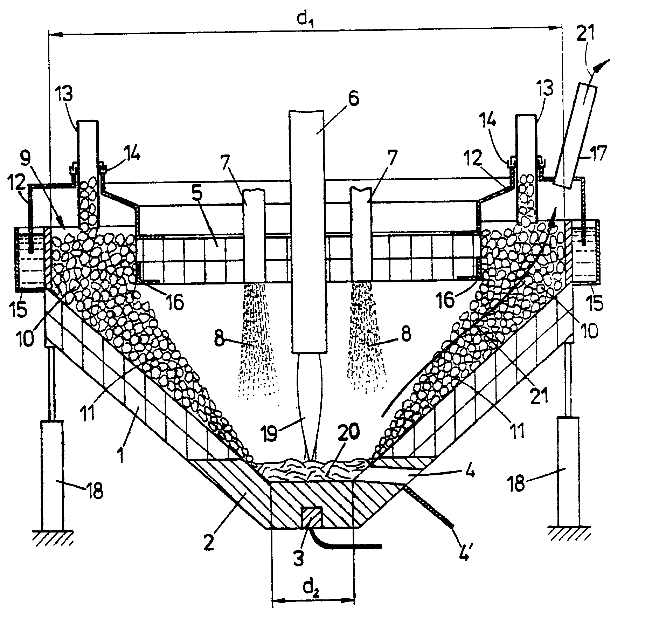

Die Erfindung wird in der Zeichnung anhand einer Ausführungsform des erfindungsgemäßen Schachtofens noch näher erläutert.

Die mit 1 bezeichnete, feuerfest ausgekleidete Ofenwand ist zum Bodenteil 2 des Schachtofens hin kegelstumpfförmig konvergierend geformt und weist an ihrem oberen Randbereich einen Durchmesser $d_1$ auf. Der Bodenteil 2 bildet gemeinsam mit der geneigten Ofenwand 1 die Ofenwanne. Im Bodenteil 2 des Schachtofens ist eine wassergekühlte Bodenelektrode bzw. Anode 3 - z. B. aus Kupfer - vorgesehen. Der Bodenteil 2, dessen Durchmesser mit $d_2$ bezeichnet ist, besteht in der dargestellten Ausführungsform aus graphitreichem, elektrisch leitendem Material und dient daher selbst als großflächige Elektrode. Der Bodenteil 2 wird seitlich von einer Abstichöffnung 4 durchsetzt, welche an der Außenseite der Ofenwand 1 in eine Abstichschnauze 4', die gleichfalls aus Kupfer gefertigt und wassergekühlt sein kann, mündet. Durch die obere Abdeckung 5 des Schachtofens, welche an einer nicht dargestellten Tragkonstruktion aufgehängt ist, ist eine aus einem einzigen, zentral angeordneten Plasmabrenner 6 bestehende Plasmabrennereinrichtung geführt.

Gleichfalls durch die obere Abdeckung 5 sind sechs den Plasmabrenner 6 kranzförmig umgebende Chargierrohre 7 für die Feinkornfraktion 8 des Möllergemisches geführt. Der Plasmabrenner 6 und die Rohre 7 können durch Sandtassen gegen den Ofeninnenraum abgedichtet sein.

Der Durchmesser der oberen Abdeckung 5 ist so gewählt, daß zwischen dem oberen - den Durchmesser $d_1$ aufweisenden - Randbereich der Ofenwand 1 ein Ringspalt 9 besteht, durch welchen Ringspalt, die Grobkornfraktion 10 des Möllergemisches unter Ausbildung eines beweglichen Schutzwalles 11 an der Innenwand in den Schachtofen eingebracht wird. Der Ringspalt 9 ist von einer ringförmigen, an der oberen Abdeckung 5 befestigten Ofenhaube 12 überdeckt und durch die Ofenhaube 12 sind gasdicht Zufuhreinrichtungen 13 für die Grobkornfraktion 10 geführt, wobei die Abdichtung mittels Sandtassen 14 erfolgt.

Der periphere Teil der Ofenhaube 12 greift in eine Wassertasse 15, welche an der Außenseite der Ofenwand 1 montiert ist, ein, so daß kein Falschluftzutritt in das Ofeninnere möglich ist. Die untere Kante der Abdeckung 5 ist mit einer Schutzeinlage 16 aus verschleißarmem Material versehen, um den durch das vorbeifließende Möllergemisch bewirkten Abrieb gering zu halten.

Die Ofenhaube 12 ist weiters von einer Abzugsleitung 17 für das kohlenmonoxidhältige Prozeßgas durchsetzt. Durch Hydraulikorgane 18 kann die Ofenwanne in axialer Richtung bewegt werden. Zusätzlich können Einrichtungen für eine horizontale Bewegung der Ofenwanne vorgesehen sein.

Der Durchmesser $d_1$ des oberen Randbereiches der Ofenwand 1 kann beispielsweise ca. 3,60 m betragen, jener der Abdeckung 5 ca. 2,40 m, so daß sich eine Ringspaltbreite von etwa 0,60 m ergibt.

Die Hydraulikorgane 18 werden bei einem Schachtofen mit den voranstehend angegebenen Dimensionen zweckmäßig so ausgelegt, daß sie einen Hub der Ofenwanne von etwa 0,5 m ermöglichen.

Die Zündung des Plasmabogens 19 erfolgt in üblicher Weise, wobei der Reaktionsraum und der Bodenteil 2 des Ofens beispielsweise durch Verbrennen von zusätzlich eingebrachten Kohlenstoff mit Sauerstoff vorgeheizt wird und anschließend mit dem durch den Plasmabrenner 6 zugeführten Plasmagas die gewünschte Leistung unter Stromzufuhr eingestellt wird. Als Plasmagas können alle für diesen Zweck gebräuchlichen Gase, wie Kohlenmonoxid oder Wasserstoff, vorzugsweise jedoch ein Inertgas wie Argon, verwendet werden.

Nach der Zündung des Plasmabrenners und der Zufuhr des aus Grob- und Feinkornfraktion bestehenden Möllers findet die Reaktion zu Calciumcarbid bei 2000 bis 2500° statt, wobei sich das flüssige Calciumcarbid 20 im Bodenteil 2 des Ofens sammelt. Der Abstich des flüssigen Calciumcarbids erfolgt im unteren Teil des Ofens entweder vorzugsweise kontinuierlich oder aber diskontinuierlich.

Das bei der Reaktion entstehende kohlenmonoxidhältige Prozeßgas strömt in Richtung der Pfeile 21 durch den beweglichen Schutzwall 11 und verläßt den Schachtofen durch wenigstens eine Abzugsleitung 17.

Die Hauptvorteile der Erfindung sind in der hohen Betriebssicherheit des Schachtofens, den geringen Wärmeverlusten, in der sehr guten Ausbeute bei hohem Ausbringungsgrad sowie in der hohen Reinheit (bis zu 95 %) des erzeugten Calciumcarbids zu sehen.

## Patentansprüche

1. Verfahren zur Herstellung von Calciumcarbid in einem Schachtofen, wobei durch Einbringen von elektrischer Energie mittels einer Plasmabrennereinrichtung (6), welche die obere Abdeckung (5) des Schachtofens durchsetzt, und einer im Bodenteil (2) des Schachtofens vorgesehenen Gegenelektrode (1) ein Plasmabogen (eine Plasmafackel) (19) gebildet wird, um welche(n) konzentrisch ein Möllergemisch aus calciumoxid- und kohlenstoffhältigen Substanzen eingebracht und ein Schutzwall (11) aus festen Möllerbestandteilen an der Innenwand des Ofens entsteht, dadurch gekennzeichnet, daß das Möllergemisch getrennt als Grobkornfraktion (10) und als Feinkornfraktion (8) eingesetzt wird, wobei die Grobkornfraktion (10) eine mittlere Teilchengröße von 1 bis 150 mm, vorzugsweise 3 bis 100 mm, und die Feinkornfraktion eine mittlere Teilchengröße von 0,001 bis 15 mm, vorzugsweise 0,001 bis 6 mm aufweist, mit der Maßgabe, daß die Grobkornfraktion (10) durch einen Ringspalt (9) zwischen der Ofenwand (1) und der Ofenabdeckung (5) eingebracht wird und einen beweglichen Schutzwall (11) entlang der Ofenwand (1) bildet und die Feinkornfraktion (8) in den Raum zwischen Plasmabogen (19) und Schutzwall (11) eingebracht wird, wobei das bei der Umsetzung entstehende Prozeßgas durch den Schutzwall (11) aus Grobkornfraktion (10) und den Ringspalt (9) austritt.

2. Verfahren nach Anspruch 1, dadurch gekennzeichnet, daß die Feinkornfraktion (8) durch eine Mehrzahl von die Plasmabrennereinrichtung (6) kranzförmig umgebende Rohre (7) oder durch einen Ringspalt in der Ofenabdeckung (5) eingebracht wird.

3. Verfahren nach einem oder beiden der Ansprüche 1 und 2, dadurch gekennzeichnet, daß mit der Grobkornfraktion (10) 5 bis 95 Massen-% der für die Umsetzung erforderlichen Kohlenstoffmenge eingebracht wird.

4. Verfahren nach einem oder mehreren der Ansprüche 1 bis 3, dadurch gekennzeichnet, daß bis zu 90 Massen-% des Möllergemisches als Feinkornfraktion (8) eingebracht werden.

5. Verfahren nach einem oder mehreren der Ansprüche 1 bis 4, dadurch gekennzeichnet, daß die Feinkornfraktion (8) mit einem Inertgas eingeblasen wird.

6. Verfahren nach einem oder mehreren der Ansprüche 1 bis 5, dadurch gekennzeichnet, daß Calciumcarbid in flüssiger Form kontinuierlich vom Bodenteil (2) des Schachtofens abgezogen wird.

7. Schachtofen zur Durchführung des Verfahrens nach einem oder mehreren der Ansprüche 1 bis 6 mit einer feuerfest ausgekleideten Ofenwand (1) und einer oberen Abdeckung (5), durch welche eine Plasmabrennereinrichtung (6) und eine Chargiereinrichtung (7) geführt sind, und mit einer im Bodenteil (2) des Ofens vorgesehenen Gegenelektrode (3), dadurch gekennzeichnet, daß zwischen dem oberen Randbereich der Ofenwand (1) und der oberen Abdeckung (5) ein von einer ringförmigen Ofenhaube (12) überdeckter Ringspalt (9) vorgesehen ist und die Ofenwand (1) unter Ausbildung einer Ofenwanne zum Bodenteil (2) hin kegelstumpfförmig konvergierend geformt ist.

8. Schachtofen nach Anspruch 7, dadurch gekennzeichnet, daß das Verhältnis des Durchmessers ($d_2$) des Bodenteiles (2) zum Durchmesser ($d_1$) des oberen Randbereiches der Ofenwand (1) 1 : 2 bis 10, vorzugsweise 1 : 2 bis 5 beträgt.

9. Schachtofen nach einem oder beiden der Ansprüche 7 und 8, dadurch gekennzeichnet, daß die zum Ofeninneren gerichtete untere Kante der oberen Abdeckung (5) mit einer Schutzeinlage (16) aus verschleißarmem Material - vorzugsweise Siliciumcarbid - versehen ist.

10. Schachtofen nach einem oder mehreren der Ansprüche 7 bis 9, dadurch gekennzeichnet, daß durch die Ofenhaube (12) gasdicht Zufuhreinrichtungen (13) für die Grobkornfraktion (10) geführt sind.

11. Schachtofen nach einem oder mehreren der Ansprüche 7 bis 10, dadurch gekennzeichnet, daß die Ofenhaube (12) von wenigstens einer Abzugsleitung (17) für das CO-hältige Prozeßgas durchsetzt ist.

12. Schachtofen nach einem oder mehreren der Ansprüche 7 bis 11, dadurch gekennzeichnet, daß die Ofenhaube (12) an der oberen Abdeckung (5) befestigt ist, gegebenenfalls eine Wasserkühlung aufweist und mittels einer Wassertasse (15) an der Außenseite der Ofenwand (1) gegen den Ofeninnenraum abgedichtet ist.

13. Schachtofen nach einem oder mehreren der Ansprüche 7 bis 12, dadurch gekennzeichnet, daß der Bodenteil (2) des Ofens mit graphitreichem Material ausgemauert ist und als Gegenelektrode dient.

14. Schachtofen nach einem der mehreren der Ansprüche 7 bis 13, dadurch gekennzeichnet, daß die Ofenwanne sowohl in axialer als auch in radialer und/oder horizontaler Richtung mittels Hydraulikorgane (18) bewegbar gelagert ist.

15. Schachtofen nach einem oder mehreren der Ansprüche 7 bis 14, dadurch gekennzeichnet, daß die Plasmabrennereinrichtung (6) aus einem bis drei Plasmabrennern gebildet ist.

16. Schachtofen nach einem oder mehreren der Ansprüche 7 bis 15, dadurch gekennzeichnet, daß die durch die obere Abdeckung (5) geführte Chargiereinrichtung für die Feinkornfraktion (8) als drei bis sechs eine Plasmabrennereinrichtung (6) kranzförmig umgebende Rohre (7) oder als Ringspalt ausgebildet ist.

## Claims

1. Process for the production of calcium carbide in a shaft furnace, wherein a plasma arc (a plasma torch) (19) is formed by introduction of electric energy by a plasma burner means (6) penetrating the upper cover (5) of the shaft furnace and a counter electrode (3) provided in the bottom part (22) of the shaft furnace, a burden mixture of calcium-oxide- and carbon-containing-substances being introduced concentrically about the plasma arc (torch) and a protective mound (11) of solid burden components forming at the inner wall of the furnace, characterised in that the burden mixture is employed as a separate coarse-grain fraction (10) and a fine-grain fraction (8), the coarse-grain fraction (10) having a mean particle size of from 1 to 150 mm, preferably 3 to 100 mm, and the fine-grain fraction having a mean particle size of from 0.001 to 15 mm, preferably 0.001 to 6 mm, with the provision that the coarse-grain fraction (10) is introduced through an annular gap (9) provided between the furnace wall (1) and the furnace cover (5) and forms a movable protective mound (11) along the furnace wall (1), and the fine-grain fraction (8) is introduced into the space between plasma arc (19) and protective mound (11), the process gas forming at the reaction emerging through the protective mound (11) of coarse-grain fraction and the annular gap (9).

2. Process according to claim 1, characterised in that the fine-grain fraction (8) is introduced through a plurality of pipes (7) coronally surrounding the plasma burner means (6) or through an annular gap provided in the furnace cover (5).

3. Process according to one or both of claims 1 and 2, characterised in that with the coarse-grain fraction (10) 5 to 95 percent by mass of the amount of carbon necessary for the reaction is introduced.

4. Process according to one or both of claims 1 to 3, characterised in that up to 90 percent by mass of the burden mixture is introduced as fine-grain fraction (8).

5. Process according to one or both of claims 1 to 4, characterised in that the fine-grain fraction (8) is blown in with an inert gas.

6. Process according to one or both of claims 1 to 5, characterised in that calcium carbide in liquid form is continuously withdrawn from the bottom part (2) of the shaft furnace.

7. Shaft furnace for carrying out the process according to one or more of claims 1 to 6 whith a refractorily lined furnace wall (1) and an upper cover (5), through which a plasma burner means (6) and a charging means (7) are guided, and with a counter electrode (3) provided in the bottom part (2) of the furnace, characterised in that an annular gap (9) is provided between the upper marginal region of the furnace wall (1) and the upper cover (5), which annular gap is covered by an annular furnace hood (12), and the furnace wall (1) has a shape frustoconically converging towards the bottom part (2) so as to form a furnace tub.

8. Shaft furnace according to claim 7, characterised in that the ratio of the diameter $(d_2)$ of the bottom part (2) to the diameter $(d_1)$ of the upper marginal region of the furnace wall (1) amounts to 1 : 2 to 10, preferably 1 : 2 to 5.

9. Shaft furnace according to one or both of claims 7 and 8, characterised in that the upper cover (5) has a lower edge directed towards the furnace interior and a protective insert (16) of wear-resistant material - preferably silicon carbide - is provided on the lower edge.

10. Shaft furnace according to one or more of claims 7 to 9, characterised in that supply means (13) for the coarse-grain fraction (10) are gas-tightly guided through the furnace hood (12).

11. Shaft furnace according to one or more of claims 7 to 10, characterised in that the furnace hood (12) is penetrated by at least one discharge duct (17) for the CO-containing process gas.

12. Shaft furnace according to one or more of claims 7 to 11, characterised in that the furnace hood (12) is fastened to the upper cover (5), is optionally provided with a water-cooling and is sealed relative to the furnace interior by a water lute (15) provided on the outer side of the furnace wall (1).

13. Shaft furnace according to one or more of claims 7 to 12, characterised in that the bottom part (2) of the furnace is lined with graphite-rich material and serves as counter electrode.

14. Shaft furnace according to one or more of claims 7 to 13, characterised in that the furnace tub is movably mounted both in the axial and in the radial and/or horizontal directions by hydraulic organs (18).

15. Shaft furnace according to one or more of claims 7 to 14, characterised in that the plasma burner means (6) is formed by one to three plasma burners.

16. Shaft furnace according to one or more of claims 7 to 15, characterised in that the charging means guided through the upper cover (5) for the introduction of the fine-grain fraction (8) is formed of three to six pipes (7) coronally surrounding a plasma burner means (6) or as an annular gap.

**Revendications**

1. Procédé de préparation de carbure de calcium dans un four à cuve, dans lequel on forme, par apport d'énergie électrique et au moyen d'un dispositif de brûleur à plasma (6) qui traverse la fermeture supérieure (5) du four à cuve, et d'une contre-électrode (3) prévue dans la partie de fond (2) du four à cuve, un arc de plasma (ou une touche de plasma) et dans lequel on introduit un mélange de Möller composé de substances contenant de l'oxyde de calcium et du carbone selon une disposition concentrique à l'arc ou à la torche de plasma, et il se forme une paroi protectrice (11) faite de constituants solides du mélange de Möller contre la paroi interne du four, caractérisé en ce que le mélange de Möller est mis en oeuvre d'une façon divisée en une fraction à gros grain (10) et sous la forme d'une fraction à grain fin (8), la fraction à gros grain (10) présentant une dimension moyenne de particules de 1 à 150 mm, de préférence de 3 à 100 mm et la fraction à grain fin une dimension moyenne de particules de 0,001 à 15 mm, de préférence de 0,001 à 6 mm, avec la mesure consistant en ce que la fraction à gros grain (10) est introduite à travers une fente annulaire (9) ménagée entre la paroi du four (1) et la fermeture (5) du four, et forme une paroi protectrice (11) qui se déplace le long de la paroi du four, et la fraction à grain fin (8) est introduite dans l'espace compris entre l'arc de plasma (19) et la paroi protectrice (11), le gaz de processus qui se dégage pendant la réaction sortant en passant à travers la paroi protectrice (11) formée de la fraction à gros grain (10), et par la fente annulaire (9).

2. Procédé selon la revendication 1, caractérisé en ce que la fraction à grain fin (8) est introduite à travers une pluralité de tubes (7) qui entourent le dispositif de brûleurs à plasma (6) en une couronne, ou à travers une fente annulaire ménagée dans la fermeture (5) du four.

3. Procédé selon l'une des revendications 1 et 2 ou selon ces deux revendications, caractérisé en ce qu'on introduit sous la forme de la fraction à gros grain (10) 5 à 95 % en masse de la quantité de carbone qui est nécessaire pour la réaction.

4. Procédé selon l'une ou plusieurs des revendications 1 à 3, caractérisé en ce qu'on introduit sous la forme de la fraction à grain fin (8) une proportion du mélange de Möller pouvant atteindre 90 % en poids.

5. Procédé selon l'une ou plusieurs des revendications 1 à 4, caractérisé en ce que la fraction à grain fin (8) est insufflée avec un gaz inerte.

6. Procédé selon l'une ou plusieurs des revendications 1 à 5, caractérisé en ce que le carbure de calcium est extrait en continu, sous la forme liquide, au niveau de la partie de fond (2) du four à cuve.

7. Four à cuve pour la mise en oeuvre du procédé selon l'une ou plusieurs des revendications 1 à 6, comprenant une paroi de four (1) revêtue de réfractaire et une fermeture supérieure (5) à travers laquelle on fait passer un dispositif de brûleur à plasma (6) et un dispositif de chargement (7), et comprenant une contre-électrode (3) prévue dans la partie de fond (2) du four, caractérisé en ce qu'il présente, entre la région marginale supérieure de la paroi (1) du four et la fermeture supérieure (5), une fente annulaire (9) qui est recouverte par une hotte (12) du four et en ce que la paroi (1) du four présente une forme qui converge en forme de tronc de cône vers la partie de fond (2), en formant une cuvette de four.

8. Four à cuve selon la revendication 7, caractérisé en ce que le rapport du diamètre $(d_2)$ de la partie de fond (2) nu diamètre $(d_1)$ de la région marginale supérieure de la paroi (1) du four est de 1 : 2 à 10, de préférence de 1 : 2 à 5.

9. Four à cuve selon l'une des revendications 7 et 8 ou selon les deux revendications, caractérisé en ce que le bord inférieur de la fermeture supérieure (5) qui est dirigé vers l'intérieur du four est muni d'une insertion de protection (16) faite d'une matière résistante à l'usure - de préférence de carbure de silicium.

10. Four à cuve selon l'une ou plusieurs des revendications 7 à 9, caractérisé en ce que des dispositifs (13) d'entrée de la fraction à gros grain (10) traversent la hotte (12) du four à joint étanche aux gaz.

11. Four à cuve selon l'une ou plusieurs des revendications 7 à 10, caractérisé en ce que la hotte (12) du four est traversée par au moins une conduite d'évacuation (17) pour le gaz de processus contenant du CO.

12. Four à cuve selon l'une ou plusieurs des revendications 7 à 11, caratérisé en ce que la hotte (12) du four est fixée à la fermeture supérieure (5), présente éventuellement un refroidissement par eau et enferme la chambre intérieure du four à joint étanche au moyen d'un joint à rigole d'eau (15) prévu sur la face externe de la paroi (1) du four.

13. Four à cuve selon l'une ou plusieurs des revendications 7 à 12, caractérisé en ce que la partie de fond (2) du four est revêtue d'une matière riche en graphite et sert de contre-électrode.

14. Four à cuve selon l'une ou plusieurs des revendications 7 à 13, caractérisé en ce que la cuvette du four est montée mobile dans la direction axiale aussi bien que dans la direction radiale et/ou horizontale au moyen d'organes hydrauliques.

15. Four à cuve selon l'une ou plusieurs des revendications 7 à 14, caractérisé en ce que le dispositif de brûleur à plasma (6) est formé d'un à trois brûleur(s) a plasma.

16. Four à cuve selon l'une ou plusieurs des revendications 7 à 15, caractérisé en ce que le dispositif de chargement pour la fraction à grain fin (8) qui est passé à travers la fermeture supérieure (5) est formé de trois à six tubes (7) qui entourent en couronne le dispositif de brûleur à plasma (6) ou est constitué par une fente annulaire.